# EUROPEAN PATENT SPECIFICATION

(11) **EP 3 409 481 B1**
(45) Date of publication and mention of the grant of the patent: **05.02.2020**
(21) Application number: 18173953.3
(22) Date of filing: 24.05.2018
(51) Int. Cl.: B41J 3/60, B41J 13/00, B65H 29/62, B65H 85/00, B65H 31/24, H04N 1/00

(54) **PRINTING SYSTEM**
DRUCKSYSTEM
SYSTÈME D'IMPRESSION

(30) Priority: 30.05.2017 EP 17173404
(43) Date of publication of application: 05.12.2018
(73) Proprietor: OCE Holding B.V., 5914 CA Venlo (NL)
(72) Inventor: PRINSEN, Kevin H.J.R., 5914 CA Venlo (NL); LOOIJMANS, Rob J.E., 5914 CA Venlo (NL)
(74) Representative: OCE IP Department

(56) References cited:
- EP-A2- 2 687 915
- EP-A2- 2 884 342
- WO-A1-2016/177676
- JP-A- H09 258 516
- JP-A- 2015 120 264
- US-A1- 2011 279 507
- US-A1- 2014 218 755

## Description

The invention relates to a printing system comprising a print station disposed at a sheet transport path, a sheet feeder arranged to feed media sheets of different media types into the transport path so as to be fed sequentially to the print station, and a controller arranged to receive print instructions concerning images to be printed, to schedule a sequence of the media sheets, and to control the sheet feeder and the print station such that each image is printed on a sheet of a media type that has been specified for that image in the print instructions.

In such a printing system, as for example described in WO2016/177676 A1 or EP 2687915 A2, depending upon the type of print engine installed in the print station, it may be desirable or even necessary to monitor the quality of the sheets that are fed to the print station. For example, when the print engine is an ink jet printer for printing high quality images, the nozzles of the print head will be arranged at a very small spacing above the top surface of the sheets that are conveyed on the transport path. Consequently, the top surfaces of the sheets must be perfectly flat in order to prevent the sheets from colliding with the print head.

It may therefore be considered to scan the surfaces of the sheets in the transport path upstream of the print station with a sensor, e.g., a 3D laser scanner, and when the sensor detects any wrinkles or other surface irregularities of a sheet, this sheet will be skipped in the print sequence, e.g. by removing the sheet from the transport path before it reaches the print station.

However, ejecting sheets disrupts the sequence of the stream of sheets. Rejected sheets require reprinting and insertion into the position of the ejected sheets. This generally requires discharging additional sheets upstream of the rejected sheet, as else the sheet order in the output stack would be incorrect. One example is when a sheet on a duplex pass is rejected, thereby requiring said one-side printed sheet and all one - side printed sheets trailing behind said sheet to be discharged. In consequence, the productivity of the printing system is compromised and the amount of waste of material (media sheets and ink) is increased.

It is further known from JP 2015-120264A to restrict productivity decrease and running cost increase due to a recovery operation. In a case where a job composed of a plurality of pages is printed for more than one set, printing in page order is alternately carried out for each set until a defect print is detected, and normal prints for each set are sorted and conveyed onto a plurality of sheet ejection trays. If a defect print is detected, the defect print is conveyed onto a disposal tray. Normal prints, which have finished printing, following the defect print are evacuated into an evacuation area. Until the same page as the defect print is reprinted, printing in page order for sets from which a defect print has not been detected is carried out. After reprinting, normal prints resulting from reprinting and normal prints evacuated in the evacuation area are conveyed to corresponding sheet ejection trays in order. Printing of remaining pages from which a defect print has not been detected and printing of pages that have not been printed yet in a part from which the defect print has been detected are alternately carried out, and the normal prints are conveyed to corresponding sheet ejection trays.

It is an object of the invention to provide a printing system which permits a high productivity and a reduction of waste.

Thereto, in a first aspect the present invention provides a printing system according to claim 1. The printing system according to the present invention comprises:
- a print station disposed at a sheet transport path, the sheet transport path diverging to a first and a second output holder;
- a sheet feeder arranged to feed a stream of media sheets into the transport path so as to be fed sequentially to the print station;
- a sensor arranged at the transport path for detecting a quality condition of the sheets being fed to the print station;
- a sheet ejector for ejecting unsuitable sheets from the transport path to a discharge path; and
- a controller arranged to:
   - receive print instructions concerning a first and a second set of images to be printed and to schedule a print order of images to be consecutively printed on the sheets;
   - schedule images of the first and second sets into an alternating image sequence defining the print order, such that the print station alternatingly prints images of the first and second set on the sheets in the stream;
   - direct sheets printed with images from the first set to the first output holder; and
   - direct sheets printed with images from the second set to the second output holder;
   when at least one sheet in the second set is ejected to the discharge path:
   - direct printed sheets of the first set following the rejected sheet to the first output holder;
   - direct sheets of the second set following the rejected sheet to the discharge path.

When the controller determines a plurality of image sets from the print instructions, e.g. in the form of multiple print jobs (which may include multiple copies of a single batch of images), the controller schedules the images of the different image sets into an alternating order. In the scheduled print order, images of a first image set then are interchanged with images of a second image set, such that at least one image of the second image set is positioned in between images of the first image set. In a basic example, the print instructions provide two image sets A, B having images A1-A5 and B1-B5, which are re-arranged by the controller into a print order of A1-B1-A2-B2-A3-B3-A4-B4-A5-B5. Regardless of the alternating print order, the controller controls the transport mechanism to transport all sheets associated with an image set to an output holder exclusively designated for that image set. In the basic example, the sheets for the first image set A are transported to a first output holder, while sheets for the second image set B are transported to a second output holder separate from the first output holder.

In case of a sheet rejection for one of the plurality of image sets, say set A, the sheets for the other image set(s) B need not be discharged to preserve the image order on the respective output holders. Only sheets of the same image set as the rejected sheet require discharging, while the other image sets are not affected. In the basic example, sheets with images A1-B1-A2-B2-A3-B3-A4-B4-A5-B5 may be on a duplex pass, when the sheet for image A2 is rejected. Instead of discharging all upstream images A3-A5 and B2-B5 on the duplex pass, the controller ejects or discharges only the sheets of the image set A associated with the rejected sheet A2, namely images A3-A5. The other image set B then continues via the print station to its output holder to complete the image stack for set B in the desired order. The respective images assigned to the discharged sheets for image set A are then rerouted by the controller to be reprinted to complete the sheet stack for image set A at its respective output holder. In this manner, the number of reprinted sheets is reduced, thereby decreasing the waste in both sheet and ink materials. Also, productivity is increased as less reprinting is required. Hence, the object of the present invention has been achieved.

The controller designates each image set to its own individual output holder. When a sheet of the second image set is rejected, the image order in that second image set is disrupted. Any sheets irrevocably associated with the second image set upstream of the rejected sheet require discharging, e.g. one-side printed sheets approaching the print station for duplex printing with an image from the second image set. These sheets are then directed to the discharge path. The controller then reroutes the images of the discharged sheets to blank sheet positions associated with unprinted sheets in the print order, thereby delaying the images scheduled at said blank sheets positions by the amount of discharged sheets. However, the image order in the first image set is preserved, such that the sheets for the first image set may continue to their designated output holder without affecting the image order in the sheet stack.

The controller is configured to designate for ejection sheets trailing the ejected sheet. Trailing herein meaning sheets following or behind the ejected sheet in the stream of sheets when viewed along the transport direction of said stream of sheets. At the moment a first sheet is ejected at the sheet ejector, sheets on a transport path section downstream of the sheet ejector have already passed the sheet ejector and are deemed. Preferably, the downstream section is a print transport path for transporting sheets from the sheet ejector to the print station. Sheets upstream of the ejected sheet are on a transport path section with a transport direction towards the sheet ejector. In an embodiment, this transport section preferably comprises an intersection wherein blank sheets from the sheet feeder may be inserted onto this transport path section. Thereby, the sheet ejector is efficiently positioned for scanning both blank sheets prior to simplex printing as well as sheets on a duplex pass. The blank sheets from the sheet feeder may be interweaved with the one-side printed sheets on the duplex pass to achieve a higher productivity rate.

More specific optional features of the invention are indicated in the dependent claims.

In an embodiment, the controller schedules images of the first and second sets into an alternating image sequence defining the print order, thereby forming a stream of images wherein at least one image of the first set is provided in between images of the second set. Basically, the controller inserts or interweaves images of the first set in between images of the second set at different positions in the second image set. For example, at least one image of the first image set is followed by one or more images from the second image set, followed by one or more images from the first image set, etc. So, in the scheduled print order images from the first image set interchange successively or regularly with images from the second image set.

In a further embodiment, the transport path comprises a buffer transport path section upstream of the sheet ejector, wherein the controller is further configured to:
when the controller designates a sheet in the second set to be ejected to the discharge path:
- direct sheets of the first set on the buffer transport path section to the first output holder;
- designate sheets of the second set on the buffer transport path section for ejection;
- direct the designated sheets of the second set on the buffer transport path section to the discharge path; and
- reroute images assigned to the designated sheets of the second set on the buffer transport path section to unprinted sheets to be fed to the print station.
The transport path extends further from the sheet ejector device to the print station, such that sheets arranged in an order on the buffer transport path section are forced to pass along the print station in that order with respect to one another. In case of the buffer transport section being part of the duplex pass, the sheets on the duplex pass have been one-sided printed and are thereby arranged in an order defined by the scheduler. In another example, the buffer transport path section may be a feed transport path section between the sheet feeder and the sheet ejector. The order may then be determined by the media type of the sheets, e.g. an alternating series of light-weight and heavy-weight sheets. The controller, when a sheet is ejected by the sheet ejector, determines at that time which sheets are present on the buffer transport path section. No images can be rerouted to these sheets without disturbing the final order at the image stack at the output holder, as these sheets have been irrevocably linked to a specific image of a specific image set, either by printing or by media type. Within the present invention, the controller determines the image set of the rejected sheet and then determines which sheets on the buffer transport path section are further associated with said image set. These sheets of the same image set as the rejected sheet on the buffer transport path section are then designated for discharging to the discharge path by the controller. However, sheets on the buffer transport path linked to image sets other than the image set of the rejected sheet are not re-designated by the controller and allowed to pass to their previously assigned output holders. Thereby, sheets for these other image sets are each stacked in the correct order at their individual output holders. Preferably, the algorithm according to the present invention is applied to image sets with a number of images or sheets less than the sheet capacity of the buffer transport path section. For example, the length of the buffer transport paths section may at maximum support 32 sheets at a given time and then the different image sets comprise less than 32 images. It will be appreciated that the sheet feeder may insert additional sheets into the stream of sheets on the buffer transport path section, though this does not affect the relative order of the sheets already present on the buffer transport section. Relative order is preferably defined as the order of images within an image set, regardless of the presence of other images from other image sets interweaved into said set.

In a further embodiment, the controller is further arranged to:
when at least one sheet in the second set is ejected to the discharge path:
images for sheets of the second set which sheets (are designated for ejection to sheets en route to (i.e. in a position to be fed to the printing station) the print station, such that the print station reprints the rejected images on the latter sheets;
- direct the sheets with the rerouted images to the second output holder to complete a sheet stack for the second set.
For example, the sheet feeder may comprise blank sheets which have not yet been fed by the sheet feeder. These sheets may even be travelling on an input transport path section towards the intersection where the input transport path section merges onto the buffer transport paths section. The controller reroutes the images for the discharged sheets to such blank sheets, thereby altering the print order. The controller determines a cut-off point in the original print order, upstream (meaning trailing when viewed in the transport direction) of which cut-off point images are identified as sheets being on the buffer transport path section. A further cut off point may be defined for identifying the start of the buffer transport paths section. The controller inserts the images for the discharged sheets into the print order upstream of said cut-off point, preferably directly behind the cut-off point. The images in the original print order upstream of the cut-off point at the time of the sheet ejection are thereby shifted further upstream of the cut-off point by the number of inserted images. The controller designates the inserted images to be directed to the output holder for the image set of the rejected sheet. Thereby, the sheet stack for said image set may be completed in the desired order. Thereby, the print order is efficiently managed and the number of wasted sheets reduced.

In an embodiment, when the print instructions define a first image order for the first set of images and a second image order for the second set of images, the controller is arranged to:
- schedule images of the first and second sets into an alternating image sequence, such that in the print order images from the first set are alternating with images from the second set;
- direct sheets printed with images from the first set to the first output holder to form a stack of sheets with images in the first image order;
- direct sheets printed with images from the second set to the second holder to form a stack of sheets with images in the second image order; and
   when at least one sheet in the second set is ejected to the discharge path:
   - direct printed sheets of the first set downstream of the rejected sheet to the first output holder;
   - designate sheets of the second set following the rejected sheet for ejection and direct the designated sheets of the second set to the discharge path;
   - reroute the images for the designated sheets of the second set in the print order, such that the relative image order in the second set is restored.
The print instructions provide a plurality of image sets, each with their own number of images and provided in a predefined image order. The printed sheets for each image set should be output in said image order to avoid a manual resorting of each output stack by the operator. The controller schedules the images of the different image sets in an alternating image order. For example in case two image sets, the controller forms groups of images from each of the sets. Each group comprising at least one image from the first and second image set. Preferably each group comprises one image from each image set.

Within each group, the relative order of the first image set is preserved, meaning that any image which was ordered between an upstream (or trailing) and a downstream (or leading) image in the first image set, is scheduled between said upstream and downstream image in the scheduled print order, though images from the second image set may be inserted between said image and the upstream and/or downstream images of the first image set. Likewise, the image order of the second image set is maintained. Similarly, the image order for any plurality of image sets is as such maintained by the controller during scheduling.

The groups are scheduled to maintain the image order. The groups are ordered subsequently such that any group comprising an image of the first image set ordered downstream of an upstream image in the first image set is scheduled downstream of said upstream image in the print order. Images from other image sets may thereby be inserted in between said image and said upstream image of the first image set. Similarly, the groups are scheduled to maintain the image order of the second or further image sets. As the operator need only provide the print instructions, the scheduler and thus the printing system may operate unattended. Even in case of a sheet rejection, production continues without operator interference.

In another embodiment, the printing system according to the present invention further comprises a sensor is arranged at the transport path for detecting a quality condition of the sheets being fed to the print station, and the controller is adapted to receive a quality signal from the sensor and, when the quality of a sheet is found to be insufficient, wherein the controller is arranged to control the sheet ejector to transport the respective sheet to the discharge path upon receipt of the quality signal. According to the invention, the sensor is arranged to scan a surface relief of a sheet that is moving past the sensor.

The sensor that monitors the quality of the sheets will be arranged such that it can also monitor the sheets that return from the duplex loop. Then, when a sheet has been damaged or wrinkled during its travel through the duplex loop, it may still be discarded after a first image has already been printed on the first side of the sheet. Then, however, the rerouting mechanism for the image must also fulfil the condition that the sheet to which the back side image is routed bears the correct image on the front side. The sensor may in another embodiment also be a paper jam sensor configured to determine the sheet's suitability for printing from its transport behaviour. When the sheet's detected position and/or velocity deviates from its scheduled trajectory, the sheet may be jammed and has become unsuited for printing. Thereby, jammed sheets can be detected and consequently removed from the transport path.

In general, a sheet may be discarded as defective not only when it is torn or wrinkled or has a wavy surface, but also for other reasons. For example, a sheet may be rejected when its skew angle and/or its alignment in the two directions x and y in the plane of the transport path has an error that cannot be corrected.

In a further embodiment, the sheet ejector according to the present invention comprises a switch that is disposed in the sheet transport path in a position between the sensor and the print station and is arranged to divert sheets into the discharge path. The switch allows for fast and efficient removal of unsuitable sheets without halting transport of the sheets on the transport path. Thereby, high productivity levels are achieved.

According to the invention, the printing system further comprises a buffer transport path section such as a duplex loop, wherein the sensor is disposed at a point of the sheet transport path between the print station and a junction where sheets returning from the duplex loop enter into the sheet transport path again.

In a further aspect, the present invention provides a method for scheduling a print job for a printing system comprising a print station disposed at a sheet transport path diverging into a plurality of output holders and a sheet ejector for ejecting unsuitable sheets from the transport path to a discharge path; and
- receiving print instructions comprising a plurality of image sets to be printed;
- scheduling the image sets into a print order by alternating images of the different image sets;
- printing the images in the scheduled print order; and
- directing each of the printed image sets to a different one of the plurality of output holders;
- detecting a quality condition of the sheets being fed to a print station;
- transporting the respective sheet to a discharge path, when the quality of a sheet is found to be insufficient.
- discharging a number of sheets associated with one of the image sets from the transport path;
- directing the sheets associated with one of, multiple of, or all of the other image sets to their respective output holders;
- rerouting the discharged images associated with the one of the image sets into the print order, such that the relative image order in the one of the image sets is restored or preserved.

Upon receiving the print instructions for multiple image sets via the user interface, the controller shuffles the image of the different image sets into an interchanging image order. Images of the different image sets alternate with respect to one another. Images of other image sets are inserted into the first image set at various positions in the first set. The images are then printed in said scheduled print order and after completion of the printing, the printed image sets are transported to different output holders, as designated by the controller. This has the advantage that in case of a rejection of a sheet to a discharge path, not all sheets upstream of the rejected sheet on the transport path need to be discharged to conserve the image order at the output stacks. Only sheets trailing the rejected sheet and related to the image set of the rejected sheet require discharging and reprinting, thereby substantially reducing the amount of waste material.

A sensor is provided to scan the sheet and assess the sheet's suitability for printing, e.g. by comparing the sheet height to the print gap spacing of the print station. When the controller determines from the sensor data that the sheet is unsuited for printing, the controller controls the sheet ejector to move the respective sheet from the transport path to the discharge path.

To preserve the image order at the output stack, upstream or trailing sheets of the same image set as a rejected sheet are also discharged to the discharge path. Since the other image sets are designated to different output holders, said images may continue to their respective output holders as the image order for said image sets is preserved. The controller then amends the print order by inserting the discharged images, preferably downstream of or before any not-yet printed images of the respective image set. Thereby, the image order is restored.

In an embodiment, the method according to the present invention further comprises the step of:
- assigning each one of the image sets to one of the plurality of output holders. The controller assigns or designates the first and the second image set in the print instructions to different ones of the output holders. Images of the first image sets are set to move to the first output holder while images of the second image set are transported to the second output holder. As such, the image sets are distributed over the different output holders.

In a further aspect, the present invention provides a software product comprising program code on a non-transitory computer-readable medium, wherein said program code, when loaded into a computer that is connected to a printing system having a print station disposed at a sheet transport path, a sheet feeder arranged to feed media sheets of different media types into the transport path so as to fed sequentially to the print station, and a sheet ejector for ejecting unsuitable sheets from the transport path to a discharge path, causes the computer to act according to the method according to the present invention.

Embodiment examples of the invention will now be described in conjunction with the drawings, wherein:
- Fig. 1: is a schematic view of a printing system according to the invention;
- Fig. 2: is a diagram illustrating an example of scheduling images in a printing system according to the present invention;
- Fig. 3: is a diagram illustrating another example of scheduling images in a printing system according to the prior art (top row) compared to the present invention (bottom row);
- Figs. 4A-D: are schematic views of a printing system according to the prior art during the different steps of a method applied in the prior art;
- Figs. 5A-F: are schematic views of a printing system according to the present invention during the different steps of a method according to the present invention; and
- Fig. 6A-B: are diagrams of the steps of the method according to the present invention; and
- Fig. 7: is a diagram of an embodiment of the scheduling algorithm according to the present invention for printing multiple identical image sets.

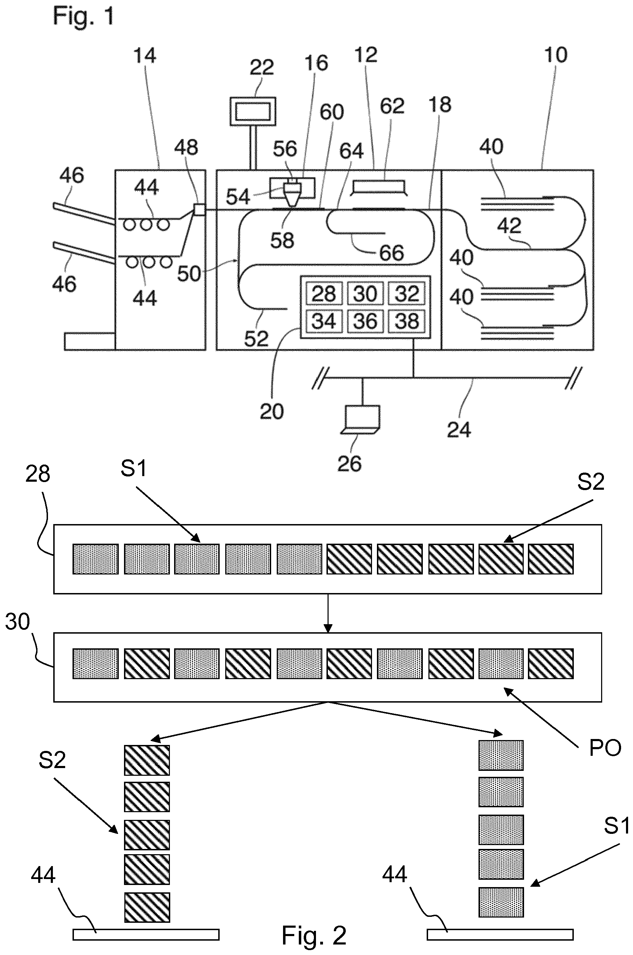

As is shown in Fig. 1, a printing system that is described here as a representative example comprises an input section or sheet feeder 10, a main body 12, and an output section or sheet receiver 14. The main body 12 comprises a print station 16 disposed at a sheet transport path 18, an electronic controller 20 and a user interface 22.

The controller 20 may be formed by a computer, a server or a workstation and is connected to all the functional components of the printing system for controlling the printing system and is further connected to the user interface 22 and to a network 24 via which the controller may communicate with a remote workstation 26 of a user or operator. In an alternative embodiment, the controller 22 may also be installed outside of the main body 12 for controlling the various system components via the network 24.

The hardware and/or the software of the controller 20 includes among others a print job receiving section 28, a scheduler 30, a feed control section 32, a print control section 34, an output control section 36, and a sheet manager 38. The print job receiving section 28 is arranged to receive, e.g., via the network 24, print jobs each of which includes image data for one or more pages to be printed as well as various job settings. Optionally, the image data may also be received from a local scanner whereas the job settings are input at the user interface 22. The job settings include among others instructions that specify for each image to be printed the properties or type of a recording medium on which the image shall be printed.

The sheet feeder 10 includes a plurality of holders 40 each of which accommodates a supply, e.g. a stack of media sheets of a certain media type. The media types in the different holders 40 may differ in sheet thickness, sheet material, surface properties of the sheets and the like. The input section 10 further includes a feed mechanism 42 arranged to separate individual sheets from a selected one of the holders 40 and to supply them one by one into the sheet transport path 18 under the control of the feed control section 32.

When the job receiving section 28 has received a print job, the scheduler 30 determines a sequence in which the images of this print job shall be printed. For the purposes of this description, the term "image" shall designate a page size image that is to be printed onto one side of a recording sheet. The scheduler 30 further has access to a data base that stores the media types and properties of the sheets accommodated in the various holders 40. Based on the job settings that concern the media properties, the scheduler 30 selects the holders 40 from which the sheets with the desired properties are to be taken and determines a sequence in which the sheets of the different media types are to be fed into the sheet transport path 18 such that the sequence of sheets matches the sequence of images to be printed.

When the print process has been started, the feed control section 32 controls the feed mechanism 42 to supply the sheets in the sequence as scheduled into the sheet transport path 18, and the print control section 34 controls the print station 16 so as to print a corresponding image on the top side of each sheet.

In the example shown, the output section 14 has a plurality of holders 44 on which the sheets may be stacked after they have left the print station 16. When a stack, which may for example comprise a set of sheets forming a complete copy of a multi-page document, has been completed, the holder 44 will forward the stack onto an associated output tray 46. In an alternative embodiment the completed stacks may also be forwarded to a finisher (not shown) for performing finishing operation such as stapling, punching and the like.

The output section 14 further includes a switch 48 which is controlled by the output control section 36 for directing each sheet to a designated one of the holders 44.

In the example shown, the main body 12 of the printing section also includes a duplex loop 50 which branches off from the sheet transport path 18 downstream of the print station 16, reverses the orientation of the sheets in a sheet reversing mechanism 52 and then returns the sheets upside down to the entry side of the sheet transport path 18.

It shall further be assumed in this example that the print station 16 includes as print engine an ink jet print head 54 that is disposed above the sheet transport path 18 and is adjustable in height by means of a height adjustment mechanism 56. Dependent upon the thickness and other properties of the sheets, the height of the print head 54 is adjusted such that a nozzle face 58 at the bottom side of the print head forms only a very narrow gap with a top surface of a sheet 60 that is being conveyed past the print head. In this way, it will be assured that, for each individual sheet, the ink jet print process will be performed with an optimal nozzle-to-sheet distance.

As the gap between the nozzle face 58 and the sheet 60 may be very small, any wrinkles or a surface waviness or other surface irregularities of the sheet 60 may result in a poor image quality or even in a collision of the sheet with the print head. For this reason, a sensor 62 for monitoring the quality of the sheets is disposed at the sheet transport path 18 upstream of the print station 16. The sensor 62 may for example be a 3D laser scanner that scans the entire surface of the sheet in order to capture a surface relief. The relief data are transmitted to the sheet manager 38 in the controller 20, where they are processed further to decide whether the quality of the sheet is acceptable or not. The sensor 62 may also detect other quality criteria relating to, for example, alignment errors or skew errors of the sheets.

When a sheet is found to be inacceptable, the sheet manager 38 controls a switch 64 in the sheet transport path 18 in order to excise this sheet from the scheduled sequence and to divert it into a discharge path 66 via which the sheet is discharged into a discharge bin (not shown). In this way, the defective sheet will be skipped in the print process. However, the image that was designated for being printed onto the discarded sheet must nevertheless be printed. Normally, this situation would lead to an abortion of the print process, with the result that the entire print process, including the scheduling process, has to be started anew, and all the sheets that had been present already in the sheet transport path 18 and in the duplex loop 50 would have to be discarded.

It should be observed in this context that Fig. 1 is only a schematic sketch and that, in practice, the number of sheets that can be accommodated in the sheet transport path 18 and in the duplex loop 50 may be considerably large. For example, the duplex loop 50 may be arranged to accommodate as many as 32 sheets.

In order to reduce the amount of waste material when a sheet is found to be unacceptable, the sheet controller 20 forms a print order wherein the images of different image sets S1-S3 are alternated with respect to one another while assigning sheets 60 of each image set S1-S3 to be output to a different output holder 44. An example of such a scheduling algorithm will now be explained in conjunction with Fig. 2.

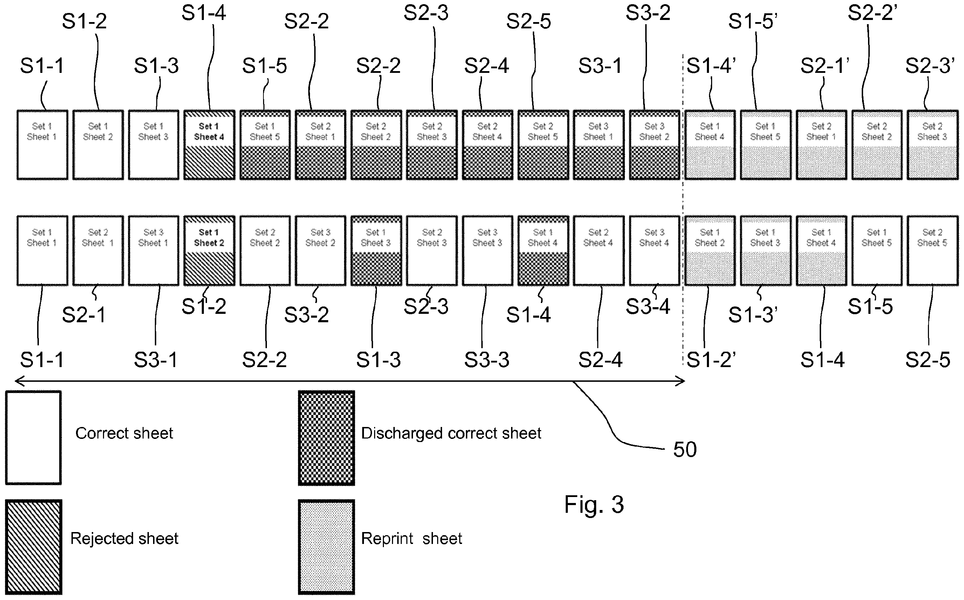

Fig. 2 illustrates print instructions comprising two image sets S1, S2 being received at the job receiving section 28. Each image set S1, S2 is provided a predefined image order PO which determines the sequence PO in which the images are to be output at the output holders 44. The scheduler 30 shuffles the images of the received image sets S1, S2 to form an alternating image order PO as shown in Fig. 2. Sheets of the first image set S1 are interchanged with images of the second image set S2. This scheduled print order PO or queue PO determines the sequence PO in which the images are to be printed by the print station 16. The scheduler 30 designates each image set S1, S2 to a different one of the output holders 44. Images of the first image set S1 are thus transported to a different output holder 44 than images of the second image set S2. The advantages of the scheduling algorithm will be now explained with respect to Figs. 3, 4, and 5.

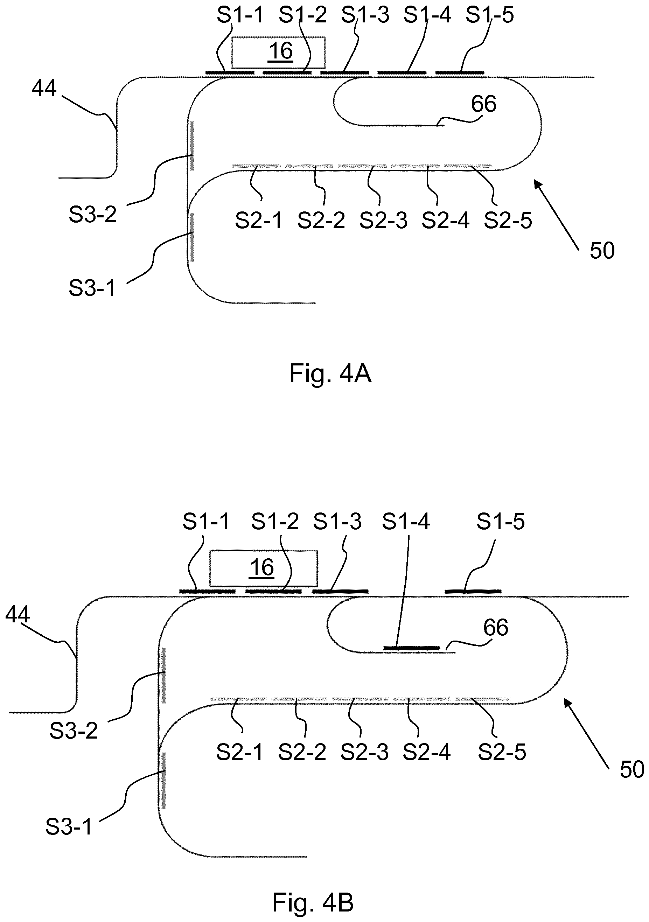

The top row in Fig. 3 as well as Figs. 4A-D represent a scheduling algorithm as applied in the prior art. The print instructions comprise three image sets S1-S3. In the shown print order PO, the first set S1 is scheduled first with its images in a following order, namely S1-1, S1-2, ..., S1-5. The second image set S2 follows the first image set S1 with its images S2-1-S2-5 ordered in ascending order. Similarly, the third image set S3 is scheduled behind or upstream of the second image set S2. All images S1-1 to S3-5 are designated to be output at the same output holder 44, thereby forming a single stack comprising sub-stacks of the respective sets S1-S3.

In the example shown in Fig. 4A, during operation, the sheets 60 assigned with the images S1-1 to S3-2 reside on the duplex pass 50. The duplex pass 50 forms a loop 50 returning the sheets 60 to the print station 16, thereby passing the feed path of the sheet feeder 10. This allows the sheet feeder 10 to insert blank sheets 60 into the sheet stream. As the sheets 60 on the duplex pass 50 have passed the print station 16, an image has been printed on one side of these sheets 60.

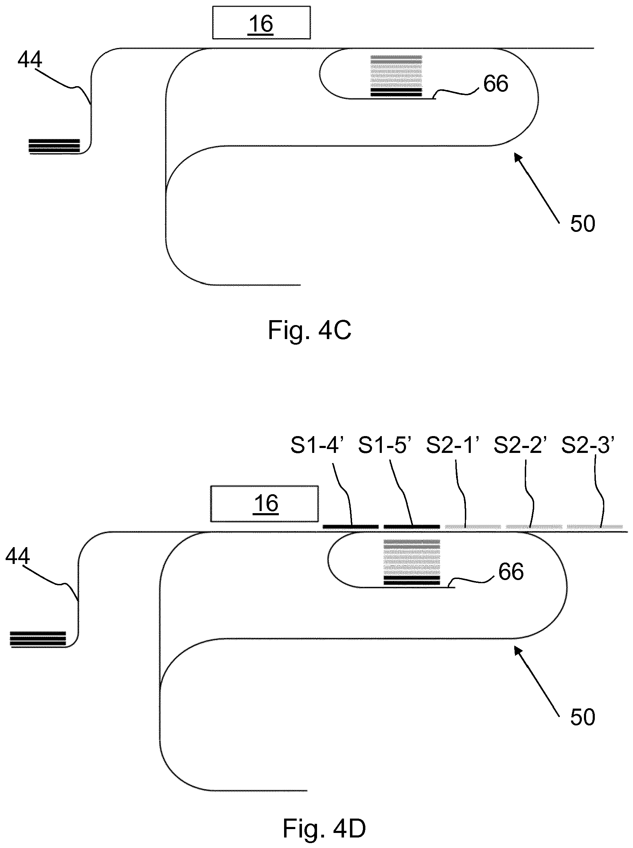

In Fig. 3 and Fig. 4B, the sheet with the fourth image S1-4 in the print order PO is rejected onto the discharge path 66. Sheets 60 trailing the rejected sheet 60 in the duplex pass 50 have already been printed on one side. In order to re-establish the original image order, those sheets 60 following the rejected sheet 60 are also discharged to the discharge path 66, as indicated in Fig. 4C. In the example of Fig. 3, this results in the loss of eight additional sheets 60, namely those designated with the images S1-5 to S3-2. The rejected images S1-4 to S3-2 are then re-assigned to blank sheets 60 upstream of the print station 16, as indicated by the sheets labelled with S1-4' to S2-3' in Fig. 4D.

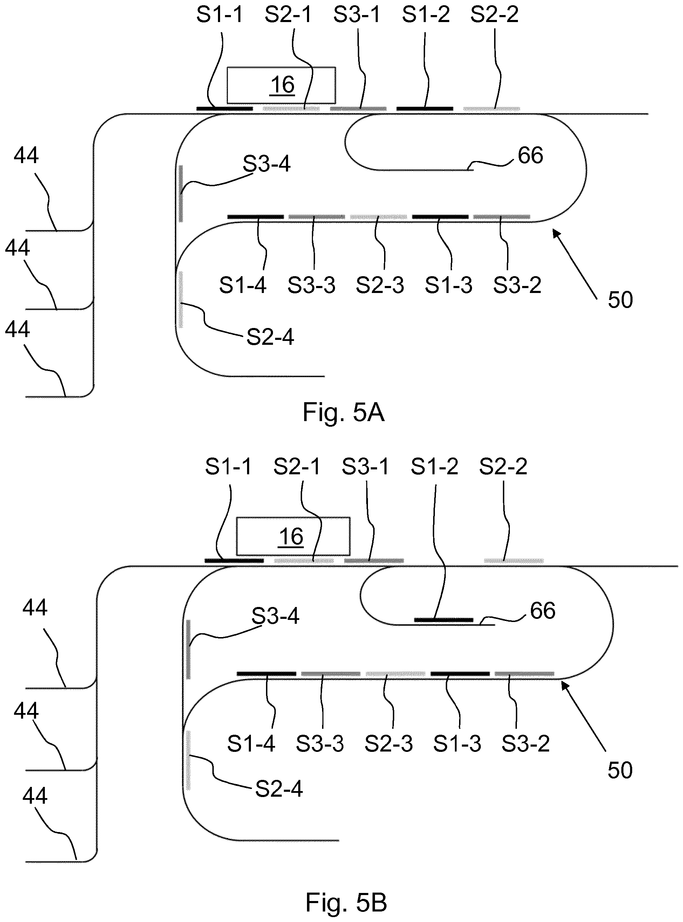

The lower rows in Fig. 3 as well as Figs. 5A-F represent a scheduling algorithm according to the present invention. The scheduler 30 according to the present invention receives print instructions for three image sets S1-S3, as described above. The scheduler 30 assigns each of the three sets S1-S3 to a different one of the output holders 44. The scheduler 30 then, prior to printing, shuffles the images sets S1-S3 to form groups each comprising at least one image from each of the image sets S1-S3. Thereby, an alternating print order PO of the images is formed. In the example shown in Fig. 3, the scheduler 30 schedules the first image S1-1 of the first image set S1 at the start of the print order queue PO. Subsequently, the first image S2-1 of the second set S2 is scheduled, followed by the first image S3-1 of the third set S3. After that, the scheduler 30 schedules the second images S1-2, S2-2, and S3-2 of the three image sets S1-S3. After that a third group is formed comprising the third images S1-3, S2-3, S3-3 of the different image sets S1-S3. As such, the print order shown in Fig. 3 and Fig. 5A is defined.

After scheduling, the printing process is started, for example based on a readiness signal from the scheduler 30. Sheets 60 associated with the first image set S1 are transported to the first output holder 44, while sheets 60 with images of the second and third image sets S2, S3 are transported respectively to the second and third output holder 44.

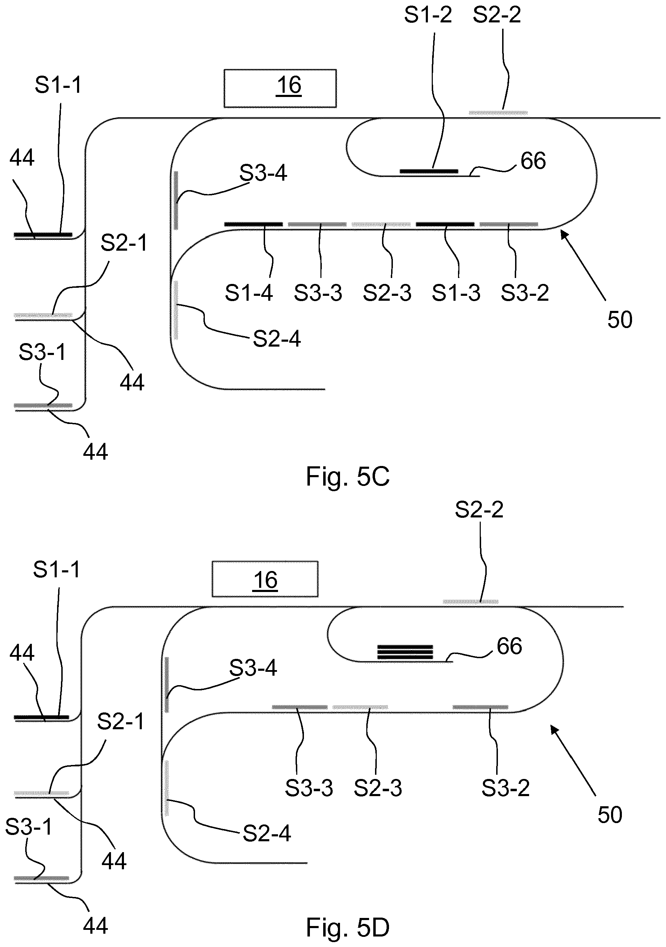

During the print process as shown in Fig. 5B, the fourth sheet with image S1-2 belonging to the first image set S1 is rejected to the discharge path 66. The completed upstream sheets S1-1, S2-1, S3-1 are each transported to their respective output holder 44, as shown in Fig. 5C.

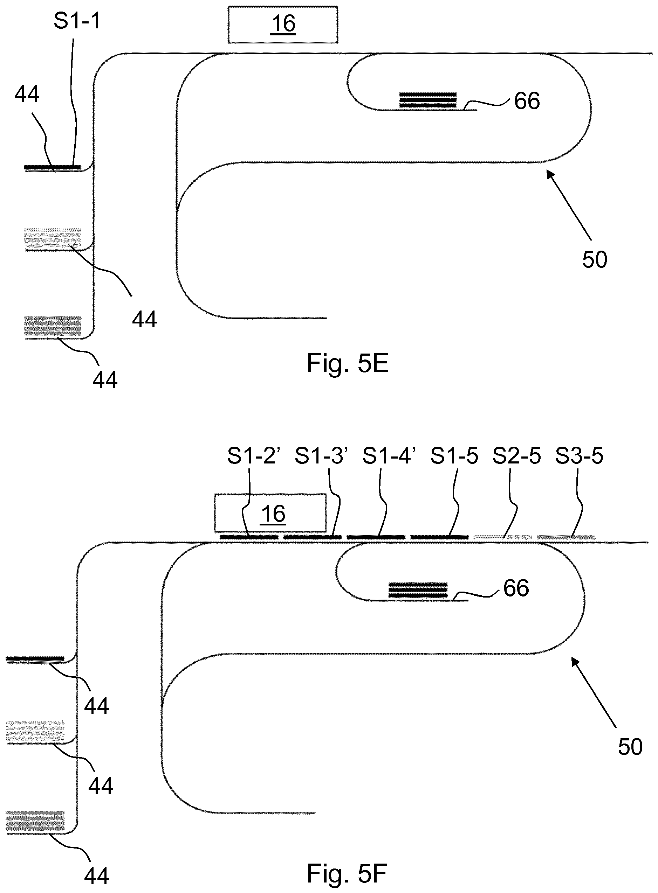

The scheduling algorithm according to the present invention has the advantage that then no sheets 60 for the second and third image sets S2, S3 need to be discharged, as these sheets 60 may be transported to their respective output holders 44 and deposited there in the desired order. To restore the image order for the first image set S1, the sheet ejector 64 need only discharge the sheets 60 on the duplex pass 50 that are associated with the first image set S1, namely the sheets 60 with images S1-3, S1-4, as indicated in Fig. 5D. While sheets 60 on the duplex pass 50 of the first set S1 are discharged, sheets 60 of the other sets S2, S3 are transported to their respective output holders 44, as shown in Fig. 5E. In contrast to the example given for the prior art, the number of additionally discharged sheets 60 is limited to only two. The amount of waste paper is thereby reduced by applying the algorithm according to the present invention.

The scheduler 30 then reroutes the discharged images S1-2, S1-3, S1-4 to blank sheets 60 upstream of the print station 16, as shown in Fig. 5F. The discharged images S1-2, S1-3, S1-4 are inserted into the printer order PO behind the last image S3-4 on the duplex pass 50. The inserted images S1-2', S1-3', S1-4' delay the scheduled images S1-5, S2-5 by the number of images S1-2, S1-3, S1-4 discharged to the discharge path 66. After inserting the discharged images S1-2', S1-3', S1-4', the print order PO may resume in its originally scheduled alternating manner. It will be appreciated that the Figs. 5A-F are illustrated schematically to indicate the separate steps performed by the algorithm according to the present invention and that different orders of the steps or the simultaneous execution of multiple steps is within the scope of the present invention.

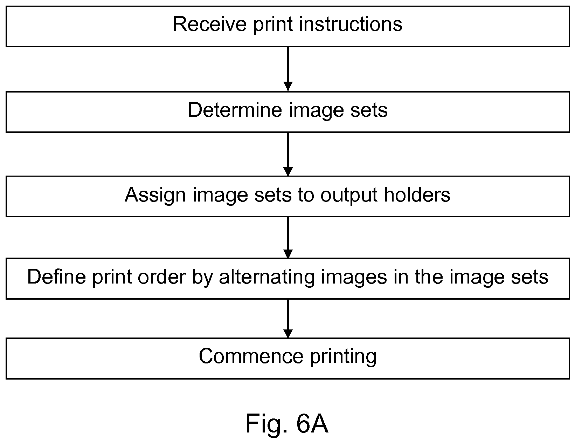

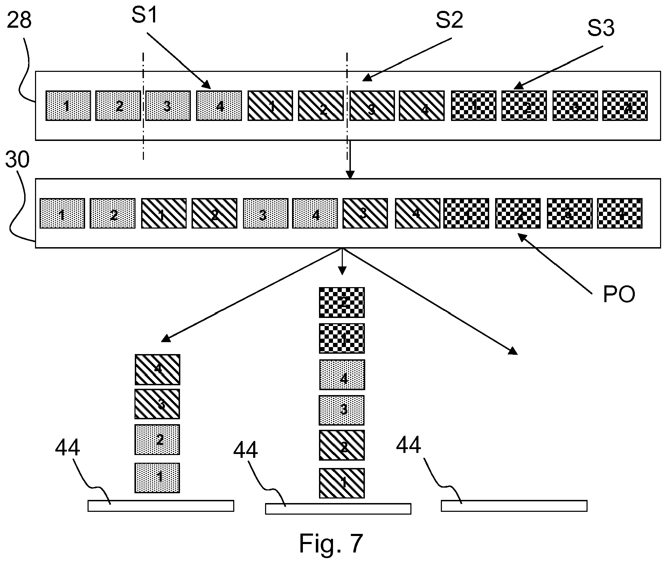

Fig. 6A illustrates the various steps of the method according to the present invention. After receiving the print instructions, the controller 20 determines the image sets S1-S3. Therein the controller 20 may define subsets as will be illustrated with regard to Fig. 7. The image (sub)sets are then designated to an output holder 44, wherein at least two (sub)sets S1-S3 are assigned to different output holders 44. In case the number of sets S1-S3 exceeds the number of output holders 44, multiple sets S1-S3 may be assigned to the same output holder 44. The controller 20 then forms the alternating image order PO where at least one image of a first set S1 is inserted in between images of a second set S2. The controller 20 then commences printing.

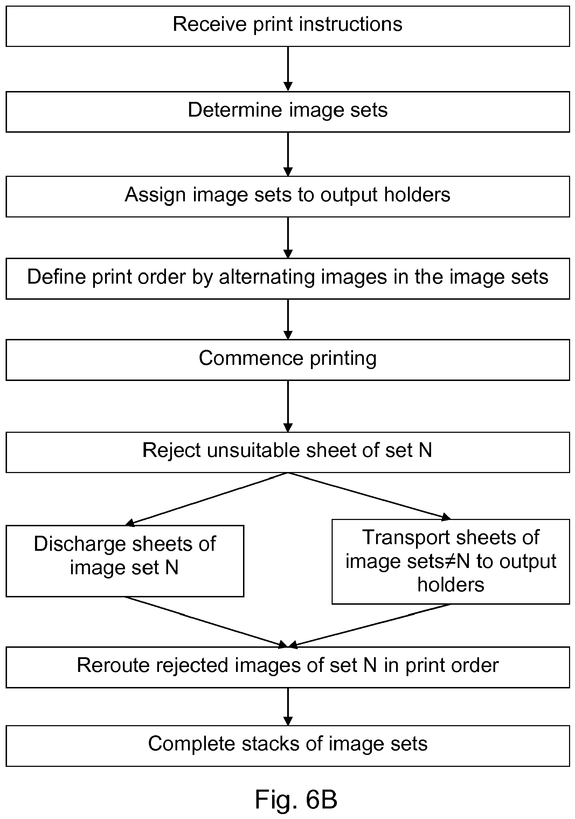

Fig. 6B illustrates the operation of the method according to the present invention in case of a sheet rejection. The controller 20 identifies the image set S1-S3 of the rejected sheet 60. Sheets 60 on the buffer transport path 50 section belonging to the identified image set S1-S3 are then also discharged. Sheets 60 associated with other image sets S1-S3 are passed to their assigned output holders 44. The controller 20 then inserts the discharged images into the print order PO, such that these images are reprinted on the desired medium type.

Fig. 7 illustrates an embodiment of the method according to the present invention particularly suited for printing multiple copies of a single image set. The print instructions in Fig. 7 comprise three identical image sets S1-S3. The scheduler 30 then divides at least one set S1 of the image sets S1-S3 into subsets comprising a portion of the images of the original image set S1, as indicated by the dotted line. The alternating print order PO is then formed

The scheduler 30 then assigns one of the subsets to a first output holder 44 on the left in Fig. 7. The subset is e.g. half of the original image set S1. The alternating printer order PO is then formed by inserting the second subset in between the second image set S2, which is thereby divided into two subsets. The first subset of set S1 is then designated to the first output holder 44 on the left in Fig. 7, while consecutive first subset of the second image set S2 is then assigned to the second output holder 44 in the middle of Fig. 7. The second subset of set S1 is then assigned to the middle output holder to complete an image set. Likewise, the second subset of set S2 completes the image set at the left output holder 44.

In case of a sheet rejection, the controller 20 discharges a number of sheets to continue stacking images at either of the output holders 44. During printing, one output holder 44 comprises a sheet stack provides a "lower" or first half of the image set S1-S3, while another output holder 44 comprises an "upper" or second half of the image set S1-S3. In case the rejected sheet 60 is part of the first half of the image set S1-S3, the controller 20 discharges sufficient sheets 60 to allow continued stacking at the stack with the second half of the image set S1-S3 and vice versa. Alternatively, the controller 20 may choose to start a new sheet stack at the third output holder 44 on the right side in Fig. 7. This stack can then also be completed up to half the image set to repeat the above mentioned method. Thereby, the number of wasted sheets 60 is reduced. It will be appreciated that any type of division into subsets may be made, e.g. thirds, halves, quarters, etc. for one or more image sets supplied by the print instructions. Within the present invention subsets in the alternating print order may be assigned to any output holder 44, as long as the image order of the sheet stack at the output holder 44 is preserved.

## Claims

1. An ink jet printing system comprising:
- a print station (16) disposed at a sheet transport path (18) diverging to a first and a second output holder (44);
- a sheet feeder (10) arranged to feed a stream of media sheets (60) into the transport path (18) so as to be fed sequentially to the print station (16);
- a duplex loop (50);
- a sensor (62) arranged at the transport path (18) for detecting a quality condition of the sheets (60) being fed to the print station (16), the sensor (62) being arranged to scan a surface relief of a sheet (60) that is moving past the sensor (62) and being disposed at a point of the sheet transport path (18) between the print station (16) and a junction where sheets (60) returning from the duplex loop (50) enter into the sheet transport path (18) again;
- a sheet ejector (64) disposed at the sheet transport path (18) in a position between the sensor (62) and the print station (16) for ejecting unsuitable sheets (60) from the transport path (18) to a discharge path (66) based on a comparison of the scanned surface relief of the sheets (60) and a print gap spacing of the print station (16); and
- a controller (20) arranged to receive print instructions concerning a first and a second set (S1, S2) of images to be printed and to schedule a print order (PO) of images to be consecutively printed on the sheets (60),
**characterized in that**:
the controller (20) is further arranged to:
- schedule images of the first and second sets (S1, S2) into an alternating image sequence defining the print order (PO), such that the print station (16) alternatingly prints images of the first and second set (S1, S2) on the sheets (60) in the stream;
- direct sheets (60) printed with images from the first set (S1) to the first output holder (44);
- direct sheets (60) printed with images from the second set (S2) to the second output holder (44);
when at least one sheet (60) in the second set (S2) is ejected to the discharge path (66):
- direct printed sheets (60) of the first set (S1) following the rejected sheet (60) to the first output holder (44);
- direct sheets (60) of the second set (S2) following the rejected sheet (60) to the discharge path (66).

2. The printing system according to claim 1, wherein the controller (20) schedules images of the first and second sets (S1, S2) into an alternating image sequence defining the print order, thereby forming a stream of images wherein at least one image of the first set (S1) is provided in between images of the second set (S2).

3. The printing system according to claim 1 or 2, wherein the transport path (18) comprises an buffer transport path section (50) upstream of the sheet ejector (64),
wherein the controller (20) is further configured to:
when the controller (20) designates a sheet (60) in the second set (s2) to be ejected to the discharge path (66):
- direct sheets (60) of the first set (S1) on the buffer transport path (50) section to the first output holder (44);
- designate sheets of the second set (S2) on the buffer transport path section (50) for ejection;
- direct the designated sheets (60) of the second set (S2) to the discharge path (66); and
- reroute images assigned to the designated sheets (60) of the second set (S2) on the buffer transport path section (50) to unprinted sheets (60) to be fed to the print station (16).

4. The printing system according to any of the previous claims, wherein the controller (20) is further arranged to:
when at least one sheet (60) in the second set (S2) is ejected to the discharge path (66):
- reroute the images for sheets (60) of the second set (S2) which sheets (60) are designated for ejection to sheets (60) en route to the print station (16), such that the print station (16) reprints the rejected images on the latter sheets;
- direct the sheets (60) with the rerouted images to the second output holder (44) to complete a sheet stack for the second set (S2).

5. The printing system according to any of previous claims, wherein, when the print instructions define a first image order for the first set of images and a second image order for the second set of images (S1, S2), the controller (20) is arranged to:
- schedule images of the first and second sets (S1, S2) into an alternating image sequence, such that in the print order (PO) images from the first set (S1) are alternating with images from the second set (S2);
- direct sheets (60) printed with images from the first set (S1) to the first output holder (44) to form a stack of sheets with images in the first image order;
- direct sheets (60) printed with images from the second set (S2) to the second holder (44) to form a stack of sheets (60) with images in the second image order; and
when at least one sheet (60) in the second set (S2) is ejected to the discharge path (66):
- direct printed sheets (60) of the first set (S1) following the rejected sheet (60) to the first output holder (44);
- designate sheets (60) of the second set (S2) following the rejected sheet (60) for ejection and direct the designated sheets of the second set (S2) to the discharge path (66);
- reroute the images for the designated sheets of the second set (S2) in the print order (PO), such that the relative image order in the second set (S2) is restored.

6. The printing system according to any of the previous claims, wherein the controller (20) is adapted to receive a quality signal from the sensor (62) and, when the quality of a sheet (60) is found to be insufficient, wherein the controller (20) is arranged to control the sheet ejector (64) to transport the respective sheet (60) to the discharge path (66) upon receipt of the quality signal.

7. The printing system according to claim 6, wherein the sheet ejector further comprises a switch (64) that is disposed in the sheet transport path (18) in a position between the sensor (62) and the print station (16) and is arranged to divert sheets (60) into the discharge path (66).

8. A method for scheduling a print job for an ink jet printing system comprising a print station (16) disposed at a sheet transport path (18) diverging into a plurality of output holders (44), a duplex loop (50), and a sheet ejector (64) for ejecting unsuitable sheets (60) from the transport path (18) to a discharge path (66); and
- receiving print instructions comprising a plurality of image sets (S1-S3) to be printed;
- scheduling the image sets (S1-S3) into a print order (PO) by alternating images of the different image sets (S1-S3);
- printing the images in the scheduled print order (60);
- directing each of the printed image sets (S1-S3) to a different one of the plurality of output holders (44);
- detecting a quality condition of the sheets (60) being fed to a print station (16) based on a surface relief scan of the sheets (60) with a sensor (62) disposed at a point of the sheet transport path (18) between the print station (16) and a junction where sheets (60) returning from the duplex loop (50) enter into the sheet transport path (18) again;
- transporting a sheet (60) to a discharge path (66), when the quality of said sheet (60) is found to be insufficient based on a comparison of the scanned surface relief of the sheets (60) and a print gap spacing of the print station (16);
- discharging a number of sheets (60) associated with one of the image sets (S1-S3) from the transport path (18) between the sensor (62) and the print station (16);
- directing the sheets (60) associated with at least of one of the other image sets (S1-S3) to its respective output holder (44);
- rerouting the discharged images associated with the one of the image sets (S1-S3) into the print order (PO), such that the relative image order in the one of the image sets (S1-S3) is restored.

9. The method according to claim 8, further comprising the step of:
- assigning each one of the image sets (S1-S3) to one of the plurality of output holders (44).

10. The method according to claim 9, wherein the image sets (S1-S3) are distributed over the different output holders (44).

11. A software product comprising program code on a non-transitory computer-readable medium, wherein said program code, when loaded into a computer that is connected to an ink jet printing system having a print station (16) disposed at a sheet transport path (18), a sheet feeder (10) arranged to feed media sheets (60) into the transport path (18) so as to be fed sequentially to the print station (16), and a sheet ejector (64) for ejecting unsuitable sheets from the transport path (18) to a discharge path (66), causes the computer to act according to the method according to any of claims 8 to 10.

## Patentansprüche

1. Tintenstrahldrucksystem mit:
- einer Druckstation (16), die an einem Bogentransportpfad (18) angeordnet ist, der sich zu einem ersten und einem zweiten Ausgabefach (44) verzweigt;
- einer Bogenzuführeinrichtung (10), die dazu ausgebildet ist, einen Strom von Medienbögen (60) in den Transportpfad (18) einzuspeisen, so dass die Bögen nacheinander zu der Druckstation (16) zugeführt werden;
- einer Duplexschleife (50),
- einem Sensor (62), der an dem Bogentransportpfad (18) angeordnet ist, zum Detektieren einer Qualitätsbedingung der Bögen (60), die zu der Druckstation (16) zugeführt werden, wobei der Sensor (62) dazu ausgebildet ist, ein Oberflächenrelief eines Bogens (60) abzutasten, der sich an dem Sensor (62) vorbei bewegt und sich an einem Punkt des Bogentransportpfades (18) zwischen der Druckstation (16) und einer Weiche befindet, wo Bögen (60), die aus der Duplexschleife (50) zurückkehren, wieder in den Bogentransportpfad (18) eintreten;
- einem Bogenauswerfer (64), der an dem Bogentransportpfad (18) in einer Position zwischen dem Sensor (62) und der Druckstation (16) angeordnet ist, zum Auswerfen ungeeigneter Bögen aus dem Transportpfad (18) zu einem Ausschusspfad (66) auf der Grundlage eines Vergleiches zwischen dem abgetasteten Oberflächenrelief der Bögen (60) und einer Druckspaltbreite der Druckstation (16); und
- einer Steuereinrichtung (20), die dazu ausgebildet ist, Druckbefehle zu empfangen, die einen ersten und einen zweiten Satz (S1, S2) von zu druckenden Bildern betreffen, und eine Druckreihenfolge (PO) von nacheinander auf die Bögen (60) zu druckenden Bildern festzulegen,
**dadurch gekennzeichnet, dass**:
die Steuereinrichtung (20) weiterhin dazu ausgebildet ist:
- Bilder der ersten und zweiten Sätze (S1, S2) in eine alternierende Bildsequenz zu ordnen, welche die Druckreihenfolge (BO) definiert, so dass die Druckstation (16) abwechselnd Bilder aus dem ersten und dem zweiten Satz (S1, S2) auf die Bögen (60) in dem Strom druckt;
- Bögen (60), die mit Bildern aus dem ersten Satz (S1) bedruckt sind, zu dem ersten Ausgabefach (44) zu lenken;
- Bögen (60), die mit Bildern aus dem zweiten Satz (S2) bedruckt sind, zu dem zweiten Ausgabefach (44) zu lenken;
wenn wenigstens ein Bogen (60) aus dem zweiten Satz (S2) in den Ausschusspfad (66) ausgeworfen wird:
- bedruckte Bögen (60) aus dem ersten Satz (S1), die auf den ausgeworfenen Bogen (60) folgen, zu dem ersten Ausgabefach zu lenken;
- Bögen (60) des zweiten Satzes (S2), die auf den ausgeworfenen Bogen (60) folgen, in den Ausschusspfad (66) zu lenken.

2. Drucksystem nach Anspruch 1, bei dem die Steuereinrichtung (20) Bilder aus den ersten und zweiten Sätzen (S1, S2) in eine alternierende Bildsequenz ordnet, welche die Druckreihenfolge definiert, und dadurch einen Strom von Bildern erzeugt, bei dem wenigstens ein Bild aus dem ersten Satz (S1) zwischen Bildern aus dem zweiten Satz (S2) angeordnet ist.

3. Drucksystem nach Anspruch 1 oder 2, bei dem der Transportpfad (18) einen Pufferabschnitt (50) stromaufwärts des Bogenauswerfers (64) aufweist, wobei die Steuereinrichtung (20) weiterhin dazu konfiguriert ist:
wenn die Steuereinrichtung (20) einen Bogen (60) in dem zweiten Satz (S2) dazu bestimmt, in den Ausschusspfad (66) ausgeworfen zu werden:
- Bögen (60) des ersten Satzes (S1) auf dem Pufferabschnitt (50) in das erste Ausgabefach (44) zu lenken;
- Bögen aus dem zweiten Satz (S2) auf dem Pufferabschnitt (50) zum Auswerfen zu bestimmen;
- die zum Auswerfen bestimmten Bögen (60) aus dem zweiten Satz (S2) in den Ausschusspfad (66) zu lenken; und
- Bilder, die den zum Auswerfen bestimmten Bögen (60) aus dem zweiten Satz (S2) auf dem Pufferabschnitt (50) zugewiesen waren, auf unbedruckte Bögen (60) umzuleiten, die zu der Druckstation (16) zuzuführen sind.

4. Drucksystem nach einem der vorstehenden Ansprüche, bei dem die Steuereinrichtung (20) weiterhin dazu ausgebildet ist:
wenn wenigstens ein Bogen (60) aus dem zweiten Satz (S2) in den Ausschusspfad (66) ausgeworfen wird:
- Bilder für Bögen (60) aus dem zweiten Satz (S2), welche Bögen (60) für das Auswerfen bestimmt sind, auf Bögen (60) umzuleiten, die sich auf dem Weg zu der Druckstation (16) befinden, so dass die Druckstation (16) die zurückgewiesenen Bilder erneut auf diese letzteren Bögen druckt;
- Bögen (60) mit den umgeleiteten Bildern zu dem zweiten Ausgabefach (44) zu lenken, um einen Bogenstapel für den zweiten Satz (S2) zu vervollständigen.

5. Drucksystem nach einem der vorstehenden Ansprüche, bei dem, wenn die Druckbefehle eine erste Bildfolge für den ersten Satz von Bildern und eine zweite Bildfolge für den zweiten Satz von Bildern (S1, S2) definieren, die Steuereinrichtung (20) dazu ausgebildet ist:
- Bilder aus den ersten und zweiten Sätzen (S1, S2) in eine alternierende Bildsequenz zu ordnen, derart, dass in der Druckreihenfolge (PO) Bilder aus dem ersten Satz (S1) mit Bildern aus dem zweiten Satz (S2) abwechseln;
- Bögen (60), die mit Bildern aus dem ersten Satz (S1) bedruckt sind, in das erste Ausgabefach (44) zu lenken, um einen Stapel von Bögen mit Bildern in der ersten Bildfolge zu bilden;
- Bögen (60), die mit Bildern aus dem zweiten Satz (S2) bedruckt sind, in das zweite Ausgabefach (44) zu lenken, um einen Stapel von Bögen (60) mit Bildern in der zweiten Bildfolge zu bilden; und
wenn wenigstens ein Bogen (60) in den zweiten Satz (S2) in den Ausschusspfad (66) ausgeworfen wird:
- bedruckte Bögen (60) aus dem ersten Satz (S1), die auf den ausgeworfenen Bogen (60) folgen, zu dem ersten Ausgabefach (44) zu lenken;
- Bögen (60) aus dem zweiten Satz (S2), die auf den ausgeworfenen Bogen (60) folgen, für das Auswerfen zu bestimmen und die für das Auswerfen bestimmten Bögen aus dem zweiten Satz (S2) in den Ausschusspfad (66) zu lenken;
- die Bilder für die zum Auswerfen bestimmten Bögen des zweiten Satzes (S2) in die Druckreihenfolge (PO) umzuleiten, so dass die relative Bildfolge in dem zweiten Satz (S2) wiederhergestellt wird.

6. Drucksystem nach einem der vorstehenden Ansprüche, bei dem die Steuereinrichtung (20) dazu ausgebildet ist, ein Qualitätssignal von dem Sensor (62) zu empfangen, wenn die Qualität eines Bogens (60) für unzureichend befunden wurde, wobei die Steuereinrichtung (20) dazu ausgebildet ist, bei Empfang des Qualitätssignals den Bogenauswerfer (64) dazu anzusteuern, den betreffenden Bogen (60) in den Ausschusspfad (66) zu überführen.

7. Drucksystem nach Anspruch 6, bei dem der Bogenauswerfer weiterhin eine Weiche (64) aufweist, die in dem Bogentransportpfad (18) in einer Position zwischen dem Sensor (62) und der Druckstation (16) angeordnet und dazu ausgebildet ist, Bögen (60) in den Ausschusspfad (66) umzuleiten.

8. Verfahren zum Planen eines Druckauftrags für ein Tintenstrahldrucksystem mit einer Druckstation (16), die an einem Bogentransportpfad (18) angeordnet ist, der sich zu einer Vielzahl von Ausgabefächern (44) verzweigt, einer Duplexschleife (50), und einem Bogenauswerfer (64) zum Auswerfen von ungeeigneten Bögen (60) aus dem Transportpfad (18) in einen Ausschusspfad (66); und
- empfangen von Druckbefehlen, die eine Vielzahl von zu druckenden Bildsätzen (S1, S3) umfassen;
- ordnen der Bildsätze (S1-S3) in eine Druckreihenfolge (PO) durch Abwechseln von Bildern aus den verschiedenen Bildsätzen (S1-S3),
- drucken der Bilder in der geplanten Druckreihenfolge (60);
- lenken jedes der gedruckten Bildsätze (S1-S3) in ein anderes Fach aus der Vielzahl der Ausgabefächer (44);
- detektieren einer Qualitätsbedingung der Bögen (60), die einer Druckstation (16) zugeführt werden, auf der Basis einer Abtastung eines Oberflächenreliefs der Bögen (60) mit einem Sensor (62), der an einem Punkt des Bogentransportpfades (18) zwischen der Druckstation (16) und einer Weiche angeordnet ist, wo die Bögen (60), die aus der Duplexschleife (50) zurückkehren, wieder in den Bogentransportpfad (18) eintreten;
- transportieren eines Bogens (60) zu einem Ausschusspfad (66), wenn die Qualität dieses Bogens (60) auf der Grundlage eines Vergleichs zwischen dem abgetasteten Oberflächenrelief der Bögen (60) und einer Druckspaltbreite der Druckstation (16) für unzureichend befunden wurde;
- austragen einer Anzahl von Bögen (60), die einem der Bildsätze (S1-S3) zugeordnet sind, aus dem Transportpfad (18) zwischen dem Sensor (62) und der Druckstation (16);
- lenken der Bögen (60), die wenigstens einem der anderen Bildsätze (S1-S3) zugeordnet sind, zu ihrem jeweiligen Ausgabefach (44);
- umleiten der ausgetragenen Bilder, die dem einen der Bildsätze (S1-S3) zugeordnet sind, in die Druckreihenfolge (PO), derart, dass die relative Bildfolge in dem einen der Bildsätze (S 1-S3) wiederhergestellt wird.

9. Verfahren nach Anspruch 8, weiterhin aufweisend den Schritt des:
- Zuweisens jedes der Bildsätze (S1-S3) zu einem Fach aus der Mehrzahl der Ausgabefächer (44).

10. Verfahren nach Anspruch 9, bei dem die Bildsätze (S1-S3) über verschiedene Ausgabefächer (44) verteilt werden.

11. Softwareprodukt mit Programmcode auf einem nichtflüchtigen computerlesbaren Medium, wobei der Programmcode, wenn er in einen Computer geladen wird, der mit einem Tintenstrahldrucksystem verbunden ist, das eine Druckstation (16), die an einem Bogentransportpfad (18) angeordnet ist, eine Bogenzuführeinrichtung (10), ausgebildet zum Zuführen von Medienbögen (60) in den Bogentransportpfad (18), so dass sie nacheinander zu der Druckstation (16) zugeführt werden, und einem Bogenauswerfer (64) zum Auswerfen von ungeeigneten Bögen aus dem Transportpfad (18) in einen Ausschlusspfad (66) aufweist, den Computer veranlasst, gemäß dem Verfahren nach einem der Ansprüche 8 bis 10 zu agieren.

## Revendications

1. Système d'impression à jet d'encre comprenant :
- un poste d'impression (16) disposé au niveau d'un trajet de transport de feuille (18) divergeant vers un premier et un second support de sortie (44) ;
- un dispositif d'alimentation de feuille (10) agencé pour fournir un courant de feuilles de support (60) dans le trajet de transport (18) de sorte qu'elles soient fournies de manière séquentielle au poste d'impression (16) ;
- une boucle duplex (50) ;
- un capteur (62) agencé au niveau du trajet de transport (18) pour la détection d'un état de qualité des feuilles (60) qui sont fournies au poste d'impression (16), le capteur (62) étant agencé pour balayer un relief de surface d'une feuille (60) qui passe devant le capteur (62) et étant disposé au niveau d'un point du trajet de transport de feuille (18) entre le poste d'impression (16) et une jonction où des feuilles (60) revenant de la boucle duplex (50) entrent à nouveau dans le trajet de transport de feuille (18) ;
- un éjecteur de feuille (64) disposé au niveau du trajet de transport de feuille (18) dans une position entre le capteur (62) et le poste d'impression (16) pour l'éjection de feuilles inadaptées (60) du trajet de transport (18) à un trajet d'évacuation (66) sur la base d'une comparaison du relief de surface balayé des feuilles (60) et un espacement de fente d'impression du poste d'impression (16) ; et
- un dispositif de commande (20) agencé pour recevoir des instructions d'impression concernant un premier et un second ensemble (S1, S2) d'images à imprimer et pour programmer un ordre d'impression (PO) d'images à imprimer de manière consécutive sur les feuilles (60),
**caractérisé en ce que** :
le dispositif de commande (20) est en outre agencé pour :
- programmer des images des premier et second ensembles (S1, S2) dans une séquence d'image alternative définissant l'ordre d'impression (PO) de sorte que le poste d'impression (16) imprime en alternance des images du premier et second ensemble (S1, S2) sur les feuilles (60) dans le courant ;
- diriger des feuilles (60) imprimées avec des images du premier ensemble (S1) au premier support de sortie (44) ;
- diriger des feuilles (60) imprimées avec des images du second ensemble (S2) au second support de sortie (44) ;
lorsqu'au moins une feuille (60) dans le second ensemble (S2) est éjectée au trajet d'évacuation (66) :
- diriger des feuilles imprimées (60) du premier ensemble (S1) suivant la feuille rejetée (60) au premier support de sortie (44) ;
- diriger des feuilles (60) du second ensemble (S2) suivant la feuille rejetée (60) au trajet d'évacuation (66).

2. Système d'impression selon la revendication 1, dans lequel le dispositif de commande (20) programme des images des premier et second ensembles (S1, S2) dans une séquence d'image alternative définissant l'ordre d'impression, formant ainsi un courant d'images dans lequel au moins une image du premier ensemble (S1) est prévue entre des images du second ensemble (S2).

3. Système d'impression selon la revendication 1 ou 2, dans lequel le trajet de transport (18) comprend une section de trajet de transport tampon (50) en amont de l'éjecteur de feuille (64), dans lequel le dispositif de commande (20) est en outre configuré pour :
lorsque le dispositif de commande (20) désigne une feuille (60) dans le second ensemble (s2) à éjecter au trajet d'évacuation (66) :
- diriger des feuilles (60) du premier ensemble (S1) sur la section de trajet de transport tampon (50) au premier support de sortie (44) ;
- désigner des feuilles du second ensemble (S2) sur la section de trajet de transport tampon (50) pour l'éjection ;
- diriger les feuilles désignées (60) du second ensemble (S2) au trajet d'évacuation (66) ; et
- réacheminer des images attribuées aux feuilles désignées (60) du second ensemble (S2) sur la section de trajet de transport tampon (50) aux feuilles non imprimées (60) à fournir au poste d'impression (16).

4. Système d'impression selon l'une quelconque des revendications précédentes, dans lequel le dispositif de commande (20) est en outre agencé pour :
lorsqu'au moins une feuille (60) dans le second ensemble (S2) est éjectée au trajet d'évacuation (66) :
- réacheminer les images pour des feuilles (60) du second ensemble (S2), lesquelles feuilles (60) sont désignées pour l'éjection aux feuilles (60) en chemin vers le poste d'impression (16) de sorte que le poste d'impression (16) réimprime les images rejetées sur les dernières feuilles ;
- diriger les feuilles (60) avec les images réacheminées au second support de sortie (44) pour compléter une pile de feuilles pour le second ensemble (S2).

5. Système d'impression selon l'une quelconque des revendications précédentes, dans lequel, lorsque les instructions d'impression définissent un premier ordre d'image pour le premier ensemble d'images et un second ordre d'image pour le second ensemble d'images (S1, S2), le dispositif de commande (20) est agencé pour :
- programmer des images des premier et second ensembles (S1, S2) dans une séquence d'image alternative de sorte que dans l'ordre d'impression (PO) des images du premier ensemble (S1) alternent avec des images du second ensemble (S2) ;
- diriger des feuilles (60) imprimées avec des images du premier ensemble (S1) au premier support de sortie (44) pour former une pile de feuilles avec des images dans le premier ordre d'image ;
- diriger des feuilles (60) imprimées avec des images du second ensemble (S2) au second support (44) pour former une pile de feuilles (60) avec des images dans le second ordre d'image ; et
lorsqu'au moins une feuille (60) dans le second ensemble (S2) est éjectée au trajet d'évacuation (66) :
- diriger des feuilles imprimées (60) du premier ensemble (S1) suivant la feuille rejetée (60) au premier support de sortie (44) ;
- désigner des feuilles (60) du second ensemble (S2) suivant la feuille rejetée (60) pour l'éjection et diriger les feuilles désignées du second ensemble (S2) au trajet d'évacuation (66) ;
- réacheminer les images pour les feuilles désignées du second ensemble (S2) dans l'ordre d'impression (PO) de sorte que l'ordre d'image relatif dans le second ensemble (S2) soit restauré.

6. Système d'impression selon l'une quelconque des revendications précédentes, dans lequel le dispositif de commande (20) est adapté pour recevoir un signal de qualité du capteur (62) et, lorsque la qualité d'une feuille (60) est considérée comme étant insuffisante, dans lequel le dispositif de commande (20) est agencé pour commander l'éjecteur de feuille (64) pour transporter la feuille respective (60) au trajet d'évacuation (66) suite à la réception du signal de qualité.

7. Système d'impression selon la revendication 6, dans lequel l'éjecteur de feuille comprend en outre un commutateur (64) qui est disposé dans le trajet de transport de feuille (18) dans une position entre le capteur (62) et le poste d'impression (16) et est agencé pour détourner des feuilles (60) dans le trajet d'évacuation (66).

8. Procédé de programmation d'une tâche d'impression pour un système d'impression à jet d'encre comprenant un poste d'impression (16) disposé au niveau d'un trajet de transport de feuille (18) divergeant dans une pluralité de supports de sortie (44), une boucle duplex (50), et un éjecteur de feuille (64) pour l'éjection de feuilles inadaptées (60) du trajet de transport (18) à un trajet d'évacuation (66) ; et
- la réception d'instructions d'impression comprenant une pluralité d'ensembles d'image (S1-S3) à imprimer ;
- la programmation des ensembles d'image (S1-S3) dans un ordre d'impression (PO) par alternance d'images des différents ensembles d'image (S1-S3) ;
- l'impression des images dans l'ordre d'impression programmé (60) ;
- la direction de chacun des ensembles d'image imprimée (S1-S3) à un certain différent de la pluralité de supports de sortie (44) ;
- la détection d'un état de qualité des feuilles (60) étant fournies à un poste d'impression (16) sur la base d'un balayage de relief de surface des feuilles (60) avec un capteur (62) disposé au niveau d'un point du trajet de transport de feuille (18) entre le poste d'impression (16) et une jonction où des feuilles (60) revenant de la boucle duplex (50) entrent à nouveau dans le trajet de transport de feuille (18) ;
- le transport d'une feuille (60) à un trajet d'évacuation (66) lorsque la qualité de ladite feuille (60) est considérée comme étant insuffisante sur la base d'une comparaison du relief de surface balayé des feuilles (60) et un espacement de fente d'impression du poste d'impression (16) ;
- l'évacuation d'un nombre de feuilles (60) associées à un des ensembles d'image (S1-S3) du trajet de transport (18) entre le capteur (62) et le poste d'impression (16) ;
- la direction des feuilles (60) associées à au moins un des autres ensembles d'image (S1-S3) à son support de sortie respectif (44) ;
- le réacheminement des images évacuées associées à l'un certain des ensembles d'image (S1-S3) dans l'ordre d'impression (PO) de sorte que l'ordre d'image relatif dans l'un des ensembles d'image (S1-S3) soit restauré.

9. Procédé selon la revendication 8, comprenant en outre l'étape de :
- l'attribution de chacun des ensembles d'image (S1-S3) à un de la pluralité de supports de sortie (44).

10. Procédé selon la revendication 9, dans lequel les ensembles d'image (S1-S3) sont distribués sur les différents supports de sortie (44).

11. Produit logiciel comprenant un code de programme sur un support non transitoire, lisible par ordinateur, dans lequel ledit code de programme lorsqu'il est chargé dans un ordinateur qui est raccordé à un système d'impression à jet d'encre présentant un poste d'impression (16) disposé au niveau d'un trajet de transport de feuille (18), un dispositif d'alimentation de feuille (10) agencé pour fournir des feuilles de support (60) dans le trajet de transport (18) de sorte à être fournies de manière séquentielle au poste d'impression (16), et un éjecteur de feuille (64) pour l'éjection de feuilles inadaptées du trajet de transport (18) à un trajet d'évacuation (66), amène l'ordinateur à agir selon le procédé selon l'une quelconque des revendications 8 à 10.
